(19) Europäisches Patentamt
European Patent Office
Office européen des brevets

(11) **EP 4 431 215 A1**

(12) **EUROPÄISCHE PATENTANMELDUNG**

(43) Veröffentlichungstag:
**18.09.2024  Patentblatt 2024/38**

(21) Anmeldenummer: **23161495.9**

(22) Anmeldetag: **13.03.2023**

(51) Internationale Patentklassifikation (IPC):
**B23K 9/09** (2006.01)    **B23K 1/00** (2006.01)
**B23K 9/10** (2006.01)    **B23K 9/095** (2006.01)

(52) Gemeinsame Patentklassifikation (CPC):
**B23K 9/09; B23K 1/00; B23K 9/092; B23K 9/093; B23K 9/0953; B23K 9/1031**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **FRONIUS INTERNATIONAL GmbH**
**4643 Pettenbach (AT)**

(72) Erfinder: **Söllinger, Dominik**
**4600 Wels-Thalheim (AT)**

(74) Vertreter: **Patentanwälte Pinter & Weiss OG**
**Prinz-Eugen-Straße 70**
**1040 Wien (AT)**

(54)   **REGELUNG INTERVALLFÜGEVERFAHREN**

(57)   Um den Wärmeeintrag, der im Rahmen eines Lichtbogen-Intervallfügeverfahrens in ein zu fügendes Werkstück (6) eingebracht wird, genauer zu regeln, wird während des Lichtbogen-Intervallfügeverfahrens eine erste Pausendauer ($TP_1$) einer ersten Pausenphase ($PP_1$) ermittelt und in dem Fall, dass die ermittelte erste Pausendauer ($TP_1$) von einer vorgegebenen Soll-Pausendauer ($TP_{soll}$) abweicht, zumindest ein Fügeparameter des Lichtbogen-Intervallfügeverfahrens, der die Pausendauern der Pausenphasen (PP) beeinflusst, verändert, um eine Abweichung zwischen einer zweiten Pausendauer ($TP_2$) einer zweiten Pausenphase ($PP_2$), welche der ersten Pausenphase ($PP_1$) zeitlich nachfolgt, und der vorgegebenen Soll-Pausendauer ($TP_{soll}$) im Vergleich zur Abweichung der ersten Pausendauer ($TP_1$) von der Soll-Pausendauer ($TP_{soll}$) zu verringern.

Fig. 3a

**Beschreibung**

Die gegenständliche Erfindung betrifft ein Lichtbogen-Intervallfügeverfahren, welches eine Abfolge von Lichtbogenphasen und Pausenphasen umfasst, wobei die Lichtbogenphasen eine vorgegebene Lichtbogendauer aufweisen und sich mit den Pausenphasen zeitlich abwechseln, und wobei in den Lichtbogenphasen zwischen einer Fügeelektrode und einem Werkstück ein Fügestrom zum Fügen des Werkstücks fließt und in den Pausenphasen kein Fügestrom fließt. Weiters betrifft die Erfindung eine Schweißvorrichtung zur Durchführung eines Lichtbogen-Intervallfügeverfahrens, umfassend einen Schweißbrenner zum Einbringen von Energie an einer Schweiß- bzw. Lötstelle an einem Werkstück zur Erzeugung eines Schmelzbades, umfassend eine Vorschubeinheit zum Zuführen eines Schweißdrahts zum Schmelzbad, wobei der Schweißdraht durch die vom Schweißbrenner eingebrachte Energie im Bereich des Schmelzbades abschmelzbar ist, um eine Schweißnaht am Werkstück zu erzeugen und umfassend eine Steuereinheit zur Steuerung der Schweißvorrichtung.

Lichtbogen-Intervallschweißen und Lichtbogen-Intervalllöten sind zwei vielfältig eingesetzte Fügeverfahren, die sich insbesondere zur Regulierung von Temperaturverteilungen in gefügten Werkstücken oder zur Kontrolle des Wärmeeintrages, der während des Lichtbogen-Schweißens oder Lichtbogen-Lötens in ein Werkstück eingebracht wird, eignen. Die nachfolgenden Ausführungen befassen sich mit Lichtbogen-Intervallschweißen und Lichtbogen-Intervalllöten, wobei mittels des generischen Begriffs "Lichtbogen-Intervallfügen" stellvertretend beide dieser Fügeverfahren bezeichnet werden.

Lichtbogen-Intervallfügeverfahren weisen Lichtbogenphasen und Pausenphasen auf, wobei in Lichtbogenphasen zwischen einer Fügeelektrode und einem Werkstück (zumindest zeitweise) ein Lichtbogen brennt, und wobei in Pausenphasen, im Gegensatz dazu, kein Lichtbogen brennt, um den Wärmeeintrag zu reduzieren. In einer Lichtbogenphase fließt ein Fügestrom, der Wärme in ein zu fügendes Werkstück einbringt, während das Werkstück in einer Pausenphase mangels brennenden Lichtbogens und folglich mangels fließenden Fügestroms keinen Wärmeeintrag erfährt und demnach auskühlen und Wärme abgeben kann.

Aufgrund der Tatsache, dass die während des Fügens in einem Werkstück auftretenden Temperaturfelder eine Reihe von Qualitätsfaktoren beeinflussen, wie einen sich in einem gefügten Werkstück einstellenden thermischen Verzug oder verschiedene sich in einem gefügten Werkstück einstellende metallurgische Eigenschaften, wie eine Kornstruktur oder eine Nahtqualität, kommt der Regulierung des Wärmeeintrages in ein zu fügendes Werkstück wichtige Bedeutung zu, insbesondere beim Schweißen oder Löten von dünnen Blechen. Entsprechend den obigen Ausführungen können die Wärmemengen, die beim Lichtbogen-Intervallfügen in ein Werkstück eingebracht werden, durch ein Anpassen der Zeitdauern von Lichtbogen- und Pausenphasen beeinflusst werden, wodurch in weiterer Folge die in einem gefügten Werkstück auftretenden Temperaturverteilungen reguliert werden können. Wegen ihrer unmittelbaren Auswirkung auf die genannten Qualitätsfaktoren ist die Möglichkeit zur Regulierung von Temperaturfeldern ein wichtiger Grund, um anstelle eines alternativen Fügeverfahrens auf ein Lichtbogen-Intervallfügeverfahren zurückzugreifen.

In der Patentliteratur wird als bedeutende Variante des Intervallfügens insbesondere das Lichtbogen-Intervallschweißen behandelt. Konkret beschreibt DE 2214192 A1 ein Intervallschweißen, bei dem Unterbrechungen der Schweißphasen vorgesehen werden, um eine Abkühlung des geschweißten Werkstücks zu erreichen. In EP 3 744 460 A1 wird demgegenüber die Dauer sogenannter "Arc ON"-Phasen und "Arc OFF"-Phasen variiert, um einer sich einstellenden Schweißnaht eine vorgegebene Form aufzuprägen. EP 2 810 732 A2 lehrt weiters, die Zeit ab dem Start eines Kurzschlusses bis zum erstmaligen Zünden eines Lichtbogens zu erfassen und anschließend, nach einer definierten Referenzzeit eine LichtbogenWiederzündung zu starten.

Für das Lichtbogen-Intervallfügen im Allgemeinen, natürlich aber genauso für die genannten Ansätze aus dem Stand der Technik, gilt, dass sowohl die Zeitdauer von Lichtbogenphasen (nachfolgend "Lichtbogendauer") als auch die Zeitdauer von Pausenphasen (nachfolgend "Pausendauer") von zwei Arten von Zeitpunkten abhängen. Einerseits sind die Zeitpunkte des Erlöschens eines Lichtbogens (nachfolgend "Lösch-Zeitpunkte") maßgeblich, andererseits spielen die Zeitpunkte des Wiederzündens des Lichtbogens (nachfolgend "Zünd-Zeitpunkte") eine entscheidende Rolle. Für die genannten Pausenphasen gilt, dass ein Lichtbogen zu Beginn einer Pausenphase zu einem Lösch-Zeitpunkt gelöscht wird und am Ende einer Pausenphase zu einem Zünd-Zeitpunkt wiedergezündet wird. Damit ergibt sich aus der Zeitdauer, die zwischen einem Lösch-Zeitpunkt und einem diesem Lösch-Zeitpunkt direkt nachfolgenden Zünd-Zeitpunkt liegt, die Pausendauer der zugehörigen Pausenphase. Umgekehrt definiert die Zeitdauer, die zwischen einem Zünd-Zeitpunkt und einem diesem Zünd-Zeitpunkt direkt nachfolgenden Lösch-Zeitpunkt liegt, die Lichtbogendauer einer zugehörigen Lichtbogenphase. Zeitdauern von Lichtbogen- und Pausenphasen liegen typischerweise im Bereich von 300 Millisekunden bis 500 Millisekunden. Lichtbogendauern und Pausendauern können demnach Werte von 250 Millisekunden oder 300 Millisekunden oder 350 Millisekunden oder 400 Millisekunden oder 450 Millisekunden oder 500 Millisekunden aufweisen. Je nach Anwendung können aber auch längere oder kürzere Lichtbogenphasen und/oder Pausenphasen auftreten (z.B. auch kürzer als 100 Millisekunden).

Um nun die Zeitdauern von Lichtbogenphasen sowie die Zeitdauern von Pausenphasen festlegen zu können, ist es erforderlich, die während eines Lichtbogen-Intervallfügevorganges auftretenden Lösch- und Zünd-Zeitpunkte festzulegen. In diesem Zusammenhang wurde erkannt, dass die Festlegung von Lösch-Zeitpunkten ein in der Praxis üblicherweise einfach zu lösendes Problem darstellt. Da das Aufrechterhalten eines Lichtbogens eine Spannungsversorgung der zum Schweißen oder Löten eingesetzten Fügeelektroden voraussetzt, kann ein Erlöschen eines Lichtbogens einfach durch das Unterbrechen dieser Spannungsversorgung und/oder durch einen Kurzschluss erfolgen, was bereits bei nur geringem technischem Aufwand mit hoher zeitlicher Präzision möglich ist.

Die Festlegung von Zünd-Zeitpunkten erweist sich demgegenüber in vielen Fällen als komplex und je nach Situation als mit verschiedenen Schwierigkeiten verknüpft. Beim Metall-schutzgasschweißen, wie dem MIG-Schweißen oder MAG-Schweißen, aber auch beim MIG-Löten oder MAG-Löten, kann die Lichtbogenwiederzündung mittels eines elektrischen Kontakts zwischen einer während des Schweißens abschmelzenden Fügeelektrode, wie einer abschmelzenden Schweißdrahtelektrode, und einem Werkstück erfolgen (Kurzschlusszündung). Berührt die Fügeelektrode zum Wiederzünden das Werkstück, kann eine Wiederzündung bekanntermaßen entweder mittels eines hohen Zündstromes herbeigeführt werden, oder es kann die Schweiß- bzw. Fügeelektrode während des Zündens des Lichtbogens vom Werkstück abgehoben werden ("Hubzündung") und der Lichtbogen "aufgezogen" werden.

Die Frage, wann es in einer solchen Situation tatsächlich zu einem erneuten Zünden eines Lichtbogens kommt, wird von einer Reihe von Faktoren beeinflusst, wie der Distanz, die die Fügeelektrode in einer Pausenphase bis zu einem erneuten Kontakt mit dem Werkstück zurücklegen muss (nachfolgend "Anschleichweg"), oder der sogenannten Anschleichgeschwindigkeit, mit der die Fügeelektrode in der Pausenphase in Richtung zum Werkstück bewegt wird, oder der Oberflächenbeschaffenheit eines zu schweißenden Werkstücks, oder der Höhe der zum Wiederzünden angelegten Schweißspannung. Schwanken diese Faktoren, schwanken in unmittelbarer Konsequenz auch die resultierenden Zünd-Zeitpunkte. Ein tatsächlicher Zünd-Zeitpunkt kann damit von einem vorgegeben Soll-Zünd-Zeitpunkt abweichen.

Auch beim berührungslosen Zünden eines Lichtbogens zwischen einer Fügeelektrode eines Schweiß- oder Lötgeräts und einem Werkstück ist es oft nur schwer möglich, die letztlich auftretenden Zünd-Zeitpunkte exakt festzulegen oder exakt vorherzusagen. So kann zum berührungslosen Zünden ein Zündspannungsimpuls, der den Bereich zwischen einer Fügeelektrode und einem Werkstück ionisiert, angelegt werden, sodass der Lichtbogen im ionisierten Bereich zwischen Fügeelektrode und Werkstück zündet. Hierbei kann es zu Zündfehlern kommen, d.h. es kann der Fall eintreten, dass sich keine ausreichende Ionisierung und damit kein Lichtbogen bilden, wobei nach einer Pause ein weiterer Zündversuch mit einem weiteren Zündspannungsimpuls vorgenommen werden muss. In derartigen Fällen kommt es zu einer zeitlichen Verschiebung und damit wie im Fall des berührenden Zündens zu einer Schwankung des Zünd-Zeitpunktes.

Entsprechend den vorstehenden Ausführungen können beim Lichtbogen-Intervallfügen Schwankungen von Zünd-Zeitpunkten auftreten. Aus Schwankungen von Zünd-Zeitpunkten resultieren Schwankungen von Pausendauern, wobei in der Praxis Abweichungen von 1ms bis hin zu 400ms zwischen gewünschten und sich real einstellenden Pausendauern beobachtet wurden. Das wiederum hat zur Folge, dass die Wärmemengen, die in ein geschweißtes oder gelötetes Werkstück eingebracht werden, schwanken und z.B. von einer vorgegebenen Soll-Wärmemenge abweichen können, woraus wiederum unerwünschte Temperaturverteilungen folgen. Wie eingangs erwähnt, stehen die in einem Werkstück auftretenden Temperaturverteilungen in direktem Zusammenhang zu unterschiedlichen Qualitätsfaktoren, sodass unerwünschte Temperaturverteilungen Schweißnahtfehler oder Lötfehler oder unerwünschten thermischen Verzug oder unerwünschte metallurgische Eigenschaften nach sich ziehen können. Obwohl diese Zusammenhänge und Schwierigkeiten hinlänglich bekannt sind, bietet der Stand der Technik keine geeigneten, dahingehenden Lösungsansätze.

Es ist demnach eine Aufgabe der gegenständlichen Erfindung, die Wärmeeinbringung in ein gefügtes Werkstück beim Lichtbogen-Intervallfügen genauer zu regeln.

Diese Aufgabe wird durch die Merkmale der unabhängigen Ansprüche gelöst. Konkret sehen die unabhängigen Ansprüche für ein eingangs genanntes Lichtbogen-Intervallfügeverfahren sowie für eine eingangs genannte Schweißvorrichtung vor, während des Lichtbogen-Intervallfügeverfahrens eine erste Pausendauer einer ersten Pausenphase zu ermitteln und in dem Fall, dass die ermittelte erste Pausendauer von einer vorgegebenen Soll-Pausendauer abweicht, zumindest einen Fügeparameter des Lichtbogen-Intervallfügeverfahrens, der die Pausendauern der Pausenphasen beeinflusst, zu verändern, um eine Abweichung zwischen einer zweiten Pausendauer einer zweiten Pausenphase, welche der ersten Pausenphase zeitlich nachfolgt, und der vorgegebenen Soll-Pausendauer im Vergleich zur Abweichung der ersten Pausendauer von der Soll-Pausendauer zu verringern.

Durch die erfindungsgemäße Vorgehensweise wird es möglich, Lichtbogendauern und die Pausendauern gezielt auf einen vorgegebenen, gewünschten oder geforderten Wärmeeintrag abzustimmen, der während des Lichtbogen-Intervallfügeverfahrens in ein zu fügendes Werkstück eingebracht werden soll. Die vorgegebene Soll-Pausendauer ist dazu in einer vorteilhaften Weise auf den einzubringenden Wärmeeintrag abgestimmt, und kann beispielsweise über einen vorgegebenen mathematischen Zusammenhang aus dem einzubringenden Wärmeeintrag ermittelt werden. Auf diese Weise kann die mit einem Lichtbogen-Intervallfügeverfahren erreichbare Füge-Qualität merklich verbessert werden.

Es sei angemerkt, dass die erste Pausenphase und die zweite Pausenphase grundsätzlich beliebige während des Lichtbogen-Intervallfügeverfahrens herausgegriffene Pausenphasen sein können, mit der Maßgabe, dass die die zweite Pausenphase zeitlich nach der ersten Pausenphase liegt. Die erste Pausenphase und die zweite Pausenphase sind damit keinesfalls zwingend die absolut gesehen erste und die absolut gesehen zweite Pausenphase des Lichtbogen-Intervallfügeverfahrens, sondern können genauso gut erst später, im Lauf eines Lichtbogen-Intervallfügeverfahrens auftretende Pausenphasen sein. Die zweite Pausenphase muss überdies keineswegs jene Pausenphase sein, die unmittelbar auf die erste Pausenphase folgt. Zwischen erster und zweiter Pausenphase können auch eine oder mehrere weitere Pausenphasen liegen.

Im Rahmen der Erfindung wurde erkannt, dass sich insbesondere der im Rahmen des Lichtbogen-Intervallfügeverfahrens auftretende Fügestrom dazu eignet, um Lichtbogenphasen und Pausenphasen zu identifizieren, da typischerweise während der Lichtbogenphasen durchgehend ein Fügestrom fließt, auch wenn beispielsweise ein gepulster Lichtbogen eingesetzt wird (beispielsweise fließt in einer Lichtbogenphase auch ein Fügestrom, selbst wenn ein Lichtbogen durch einen Kurzschluss zwischen Schweißdraht und Werkstück unterbrochen wird, insbesondere da in Lichtbogenphasen typischerweise auch bei einem Kurzschluss nach wie vor eine Fügespannung vorhanden ist). In einer vorteilhaften Weise kann ein Lichtbogen während der Lichtbogenphasen aber auch durchgehend brennen. Während der Pausenphasen fließt jedenfalls kein Fügestrom, und es brennt auch kein Lichtbogen. Eine Lichtbogenphase kann damit als Phase aufgefasst werden, in der ein Fügestrom fließt. Durch die Betrachtung des Fügestromes können Lichtbogenphasen und Pausenphasen auf zuverlässige Weise unterschieden werden.

Es sei darauf hingewiesen, dass spezielle, in der Praxis vergleichsweise unübliche Lichtbogenschweißverfahren existieren, in denen für besonders kurze zeitliche Abschnitte auch während der Lichtbogenphasen der Fügestrom unterbrochen werden kann. Diese besonders kurzen zeitlichen Abschnitte sind üblicherweise kürzer als 10 Millisekunden, oder kürzer als 5 Millisekunden oder kürzer als 0,5 Millisekunden. Phasen, in denen grundsätzlich ein Fügestrom fließt, und welcher demgemäß nur äußerst kurz unterbrochen wird, also kürzer als 10 Millisekunde, vorteilhafterweise kürzer als 5 Millisekunden oder kürzer als 0,5 Millisekunden, werden im Rahmen dieser Ausführungen ebenso als Lichtbogenphasen aufgefasst. Eine Pausenphase kann demnach interpretiert werden als eine Phase, in der kein Fügestrom fließt, und die bevorzugt länger ist als 10 Millisekunde oder länger ist als 20 Millisekunde oder länger ist als 50 Millisekunden.

In einer vorteilhaften Weise kann es sich beim Lichtbogen-Intervallfügeverfahren entsprechend den einleitenden Ausführungen um ein Lichtbogen-Intervallschweißverfahren oder um ein Lichtbogen-Intervalllötverfahren handeln, wobei in den Lichtbogenphasen zwischen der Fügeelektrode und dem Werkstück zumindest zeitweise, vorzugsweise durchgehend, ein Lichtbogen brennt, wobei der Fügestrom zum Fügen von der Fügeelektrode, durch den Lichtbogen zwischen Fügeelektrode und Werkstück fließt.

Gemäß der üblichen Umsetzung von Regelungen von technischen Systemen kann die Ermittlung einer ersten Pausendauer fortlaufend geschehen, das bedeutet, dass nicht bloß zu einem Zeitpunkt während des Lichtbogen-Intervallfügeverfahrens eine erste Pausendauer ermittelt wird, sondern dass dies vielfach geschieht, bevorzugt zu voneinander in einer vorgegebenen zeitlichen Beabstandung beabstandeteten Zeitpunkten. Eine jede derart ermittelte Pausendauer kann ein Ausgangspunkt für eine Veränderung eines Fügeparameters sein, um eine spätere Pausendauer näher an die vorgegebene Soll-Pausendauer heranzuführen. Diese Zusammenhänge sind einer Fachperson auf dem Gebiet der Regelungstechnik natürlich hinlänglich bekannt. Um bei dieser Vorgehensweise zügig und zeitnah auf eine Abweichung zwischen einer ermittelten Pausendauer und einer vorgegebenen Soll-Pausendauer reagieren zu können, kann vorgesehen sein, dass zwischen einem Ermittlungs-Zeitpunkt, an dem eine Pausendauer ermittelt wird, und einem Regel-Zeitpunkt, an dem der zumindest eine Fügeparameter geändert wird, weniger als 100 Pausenphasen oder weniger als 50 Pausenphasen oder weniger als 10 Pausenphasen PP oder weniger als fünf Pausenphasen oder gar keine Pausenphasen liegen.

Im Rahmen der Erfindung wurde weiters erkannt, dass es vielfach vorteilhaft ist, die gegenständlichen Pausendauern nicht direkt zu ermitteln bzw. direkt zu messen, sondern stattdessen zur Ermittlung der ersten Pausendauer zumindest einen Parameterwert zumindest eines Beschreibungs-Parameters des Lichtbogen-Intervallfügeverfahrens, der die erste Pausendauer beschreibt, zu ermitteln, und die erste Pausendauer aus diesem zumindest einen ermittelten Parameterwert zu ermitteln, also eine indirekte Ermittlung bzw. eine indirekte Messung der erfindungsgemäßen Pausendauer vorzunehmen. Auf diese Weise kann die Erfindung auch in Szenarien eingesetzt werden, in denen keine direkte Messung von Pausendauern möglich ist, beispielsweise weil nur eine eingeschränkte Sensorik zur Verfügung steht.

Ebenso wurde erkannt, dass als Beschreibungs-Parameter für eine indirekte Ermittlung insbesondere eine Zeitdauer zwischen einem Aktivierungszeitpunkt, an dem während einer Pausenphase insbesondere ein Drahtvorschub wieder aktiviert wird und/oder eine Spannung zur Versorgung einer Fügeelektrode wieder erhöht wird, und einem dem Aktivierungszeitpunkt unmittelbar nachfolgenden Zünd-Zeitpunkt als Parameterwert des Beschreibungs-Parameters ermittelt werden kann, oder ein Anschleichweg, den ein Schweißdraht zwischen einem derartigen Aktivierungszeitpunkt und einem dem Aktivierungszeitpunkt unmittelbar nachfolgenden Zünd-Zeitpunkt zurücklegt.

Als Fügeparameter kann in einer vorteilhaften Weise eine Drahtvorschubgeschwindigkeit eingesetzt und also verändert werden, und/oder ein Fügestrom in einer Lichtbogenphase, und/oder ein Aktivierungszeitpunkt, und/oder ein Abstand zwischen dem Schweißdraht und dem Werkstück zu einem Aktivierungszeitpunkt und/oder eine Zeitdauer zwischen einem Lösch-Zeitpunkt und einem Aktivierungszeitpunkt und/oder eine Strom-Zeit-Fläche in einer Lichtbogenphase.

Insbesondere eine Kombination einer Ermittlung eines Anschleichweges als Parameterwert des Beschreibungs-Parameters und einer Veränderung eines Fügestromes in einer Lichtbogenphase als Fügeparameter des Lichtbogen-Intervallfügeverfahren zum Einregeln einer Pausendauer auf eine Soll-Pausendauer wurde als vorteilhaft erkannt, da ein Anschleichweg vielfach präzise und ohne großen sensorischen Aufwand ermittelt werden kann, und z.B. die Höhe eines Fügestromes in einer Lichtbogenphase in vielen Fällen einfach und ohne großen Aufwand verändert werden kann.

Die gegenständliche Erfindung wird nachfolgend unter Bezugnahme auf die Figuren 1 bis 4b näher erläutert, die beispielhaft, schematisch und nicht einschränkend vorteilhafte Ausgestaltungen der Erfindung zeigen. Dabei zeigt

Fig.1 einen standardisierten Aufbau einer Schweißvorrichtung,

Fig.2 einen schematischen Ablauf eines Lichtbogen-Intervallfügeverfahrens nach Stand der Technik,

Fig.3a einen schematischen Ablauf eines erfindungsgemäßen Lichtbogen-Intervallfügeverfahrens,

Fig.3b ein erfindungsgemäßes Lichtbogen-Intervallfügeverfahren umfassend eine Veränderung des Fügestromes und der Drahtvorschubgeschwindigkeit,

Fig.4a, Fig.4b je einen Koppelplan zur Umsetzung des erfindungsgemäßen Fügeverfahrens.

Die gegenständliche Erfindung wird nachfolgend anhand einer MSG-Schweißvorrichtung 1 zum Metall-Schutzgasschweißen (MSG-Schweißen) näher erläutert, worunter insbesondere die bekannten Methoden des Metall-Inertgasschweißens (MIG-Schweißen) und des Metall-Aktivgasschweißens (MAG-Schweißen) fallen. Es sei jedoch angemerkt, dass die Erfindung keinesfalls auf den Bereich des Metall-Schutzgasschweißens eingeschränkt ist, und unter anderem genauso im Bereich des Wolfram-Inertgasschweißens (WIG-Schweißen) oder einer anderen Schweißtechnik eingesetzt werden kann.

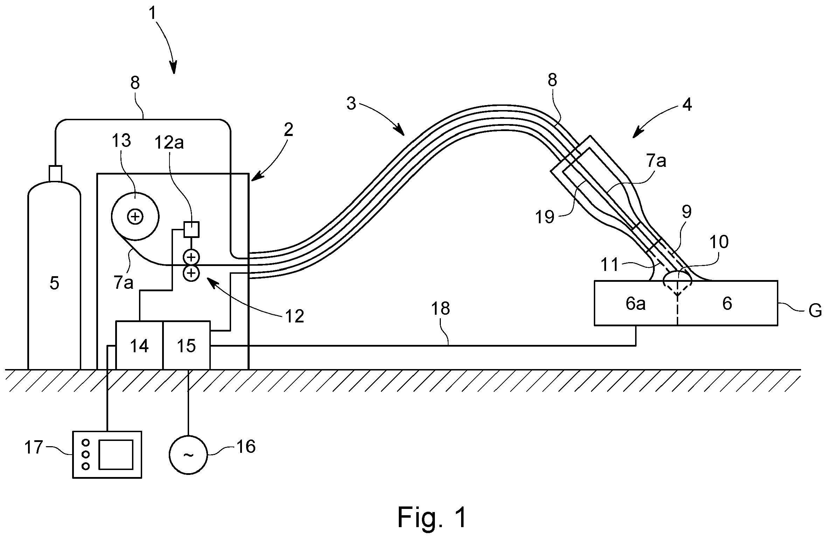

Die gegenständlich betrachtete MSG-Schweißvorrichtung 1 kann bekanntermaßen auch zum Lichtbogenlöten eingesetzt werden. Wie nachfolgend im Detail erläutert wird, ist es zur Durchführung von Lötvorgängen auf einer MSG-Schweißvorrichtung 1 lediglich erforderlich, ein zum Löten geeignetes Schutzgas SG sowie ein zum Löten geeignetes Lot als Zusatzwerkstoff, d.h. als abschmelzende Fügelektrode 7, zu verwenden. Ansonsten sind keine Änderungen, z.B. Änderungen am Schweißbrenner 4 usw., erforderlich, sodass sich insbesondere die Steuerung einer wie in Fig.1 gezeigten MSG-Schweißvorrichtung 1 beim Löten und Schweißen nicht unterscheidet. Die gegenständliche Erfindung kann dementsprechend auch im Rahmen eines Intervalllötens, das auf der MSG-Schweißvorrichtung 1 gemäß Fig.1 durchgeführt wird, eingesetzt werden, sodass auch die nachfolgenden Ausführungen, mutatis mutandis, sowohl für Schweißen als auch Löten gelten. Um diesen Umstand zu unterstreichen, wird nachfolgend auf die allgemeinen Begriffe Fügestrom I, Fügespannung U, Fügeelektrode 7, etc. zurückgegriffen, anstelle der ansonsten beim Schweißen üblichen Bezeichnungen Schweißstrom I, Schweißspannung U, Schweißelektrode 7, Schweißdraht 7a, etc. und anstelle der ansonsten beim Löten üblichen Bezeichnungen Lötstrom I, Lötspannung U, Lötelektrode 7, etc.

Die MSG-Schweißvorrichtung 1 weist eine Stromquelle 2, ein Schlauchpaket 3, einen Schweißbrenner 4 und einen Schutzgasbehälter 5 mit einem Schutzgas SG auf. Der Schutzgasbehälter 5 ist mittels einer Schutzgasleitung 8 mit dem Schweißbrenner 4 verbunden. Am Schutzgasbehälter 5 oder in der Schutzgasleitung 8 kann ein nicht dargestellter Druckregler, beispielsweise in Form einer bekannten Flaschenarmatur, vorgesehen sein, der in der Regel dazu dient, den Durchfluss des Schutzgases SG zu regeln. Je nach Material des Grundstoffs G werden entweder reaktionsarme inerte Schutzgase SGi, wie beispielsweise Argon (Ar) oder Helium (He), verwendet oder es werden aktive Schutzgase SGa wie z.B. Sauerstoff (O) oder Kohlendioxid (CO2) verwendet. Bei einem Schweißverfahren ohne Schutzgas, kann der Schutzgasbehälter 5 und die Schutzgasleitung 8 natürlich auch wegfallen. Zum MSG-Löten werden als Schutzgas SG üblicherweise Gemische aus Argon, Kohlendioxid und Wasserstoff verwendet.

In der Stromquelle 2 kann eine Fügeelektrode 7 in Form eines Schweißdrahtes 7a angeordnet sein, der üblicherweise auf einer Schweißdraht-Rolle 13 aufgewickelt ist. Zum Abwickeln des Schweißdrahtes 7a und insbesondere zum Zuführen des Schweißdrahtes 7a zu einer Fügestelle, d.h. beim Schweißen an einer Schweißstelle und beim Löten an einer Lötstelle, ist eine Vorschubeinheit 12 angeordnet, die von einer Vorschub-Antriebseinheit 12a angetrieben wird.

Um auf der MSG-Schweißvorrichtung 1 zu löten, kann anstelle eines Schweißdrahtes 7a ein Hartlot, wie ein Silberlot oder ein Messinglot oder ein Kupferbasislot, eingesetzt werden, oder es kann auf ein Weichlot zurückgegriffen werden, wie auf ein Zinnlot, das ebenso von einer Schweißdraht-Rolle 13 abgerollt werden kann. Einer Fachperson auf dem Gebiet der Fügetechnik sind diese Zusammenhänge hinlänglich bekannt.

Der Schweißdraht 7a auf der Schweißdraht-Rolle 13, und auch die Vorschubeinheit 12, können aber auch außerhalb der Stromquelle 2 in einer davon getrennten Einheit angeordnet sein. Bekanntermaßen existieren auch Ausführungsformen von Schweißvorrichtungen 1 mit mehreren Vorschubeinheiten 12, die in einer vorteilhaften Weise aufeinander abgestimmt den benötigten Drahtvorschub herbeiführen. Eine Vorschubeinheit 12 kann aber ebenso im Bereich der Fügeelektrode 7 angeordnet sein. Für die Anwendbarkeit der gegenständlichen Erfindung ergeben sich daraus keine Einschränkungen.

Die Vorschub-Antriebseinheit 12a wird von einer Steuereinheit 14 angesteuert, welche wiederum in der Regel mit einer Benutzerschnittstelle 17 kommuniziert. Über eine Benutzerschnittstelle 17 können von einem Benutzer bedarfsweise bestimmte Fügeparameter vorgegeben werden, wie z.B. eine Fügespannung U, ein Fügestrom I, eine Drahtvorschubgeschwindigkeit vd, mit der der Schweißdraht 7a zur Fügestelle vorgeschoben wird, etc. Es können beispielsweise auch vordefinierte Schweißprogramme mit bestimmten voreingestellten Fügeparametern in der Steuereinheit 14 hinterlegt sein, welche vom Benutzer über die Benutzerschnittstelle 17, oder auch von einer übergeordneten Steuerung, wie einer Steuerung eines Schweißroboters, ausgewählt werden können.

In der Stromquelle 2 ist weiters ein Leistungsteil 15 angeordnet, das von der Steuereinheit 14 gesteuert (oder geregelt) wird und die an eine externe Spannungsversorgung 16 angeschlossen ist. Die Steuereinheit 14 kann demzufolge ausgestattet sein, die gesamte MSG-Schweißvorrichtung 1 oder bestimmte Komponenten der MSG-Schweißvorrichtung 1, wie die Vorschubeinheit 12, die Steuerung der Schutzgasförderung und/oder das Leistungsteil 15 und/oder die Bewegung des Schweißbrenners 4, zu steuern und/oder zu regeln. Eine Steuereinheit 14 kann in Form von mikroprozessorbasierter Hardware, eines Mikrocontrollers, oder einer integrierten Schaltung (ASIC, FPGA) implementiert werden, und kann natürlich auch außerhalb der Stromquelle 2 angeordnet werden.

Das Leistungsteil 15 der Stromquelle 2 versorgt den Schweißbrenner 4 mit dem benötigten Fügestrom I und einer Fügespannung U über eine im Schlauchpaket 3 angeordnete Stromleitung 19. Die Fügespannung U wird zum Schweißen an die Fügeelektrode 7 angelegt, sodass beim Brennen eines Lichtbogens der Fügestrom I fließt. Daneben werden dem Schweißbrenner 4 über das Schlauchpaket 3 üblicherweise auch der Schweißdraht 7a (mittels der Vorschubeinheit 12) und das Schutzgas SG, und gegebenenfalls auch ein Kühlmedium zum Kühlen des Schweißbrenners 4, zugeführt. Im Schlauchpaket können darüber hinaus auch Steuerleitungen vorgesehen sein. Es können aber als Schlauchpaket 3 mehrere einzelne Leitungen für die jeweiligen Medien, Steuerungen und Energien vorgesehen sein.

Um einen Schweiß- oder Lötprozess durchzuführen, wird einem Werkstück 6 aus einem Grundstoff G mittels einer elektrischen Verbindung 18 ein erstes elektrisches Potential angelegt an den Schweißdraht 7a als Fügeelektrode 7 ein zweites elektrisches Potential angelegt, wodurch nach Zünden eines Lichtbogens 11 zwischen Schweißdraht 7a und dem Werkstück 6 ein Fügestrom I fließt. Hierbei können verschiedene Lichtbogenarten zum Einsatz kommen, wie Kurzlichtbogen oder Übergangslichtbogen oder Sprühlichtbogen oder Impulslichtbogen oder Cold-Metal-Transfer-("CMT")-Lichtbogen, die dem Fachmann auf dem Gebiet der Fügetechnik hinlänglich bekannt sind. Konkret beim Schweißen werden mittels des Lichtbogens 11 der Schweißdraht 7a und ein Bereich des Grundstoffs G abgeschmolzen, wodurch sich eine stoffschlüssige Verbindung zwischen dem abgeschmolzenen Schweißdraht 7a und dem Grundstoff G ergibt. Im dargestellten Beispiel wird eine Schweißnaht 10 auf das Werkstück 6 aufgeschweißt, man spricht vom sogenannten Auftragsschweißen. Es könnten aber auch zwei Werkstücke 6, 6a verbunden werden, wie durch die gestrichelte Linie symbolisiert ist, man spricht dann vom sogenannten Verbindungsschweißen. Der Lichtbogen 11 wird von dem aus dem Schweißbrenner 4 ausströmenden Schutzgas SG in Form einer Schutzgasglocke 9 umströmt, um das geschmolzene Material im Bereich der Schweißnaht 10 von der Umgebung abzuschirmen. Es sei aber angemerkt, dass grundsätzlich auch ohne Schutzgas SG geschweißt oder gelötet werden könnte. In diesem Fall könnte auf einen Schutzgasbehälter 5 und auf eine Schutzgasleitung 8 verzichtet werden.

Bei einem Schweißverfahren mit nicht-abschmelzender Fügeelektrode, wie bei WIG-Schwei-ßen, wird der Schweißdraht 7a dem Lichtbogen zugeführt und im Lichtbogen abgeschmolzen, wobei der Lichtbogen zwischen der Fügeelektrode und dem Werkstück brennt.

Der Schweißdraht 7a, also eine abschmelzende Fügeelektrode 7, wird der Fügestelle mit einer bestimmten Drahtvorschubgeschwindigkeit $v_d$ zugeführt, welche von mehreren Einflussgrößen abhängig sein kann. Beim manuellen Schweißen, bei dem der Schweißbrenner 4 von einer Person per Hand geführt wird, wird in der Regel eine konstante Drahtvorschubgeschwindigkeit $v_d$ beispielsweise in Abhängigkeit des eingestellten Fügestroms I gewählt. Bei automatisierten Schweißvorgängen, beispielsweise wenn der Schweißbrenner 4 von einem Schweißroboter geführt wird, kann die Drahtvorschubgeschwindigkeit $v_d$ z.B. zusätzlich in Abhängigkeit einer Schweißgeschwindigkeit $v_s$ gewählt

werden, mit welcher der Schweißbrenner 4 relativ zum Werkstück 6 bewegt wird.

Das erfindungsgemäße Intervallfügeverfahren kann in einer vorteilhaften Weise zum Schwei-ßen oder Löten auf einer wie in Fig.1 gezeigten MSG-Schweißvorrichtung 1 eingesetzt werden, wobei automatisiert oder per Hand geschweißt werden kann.

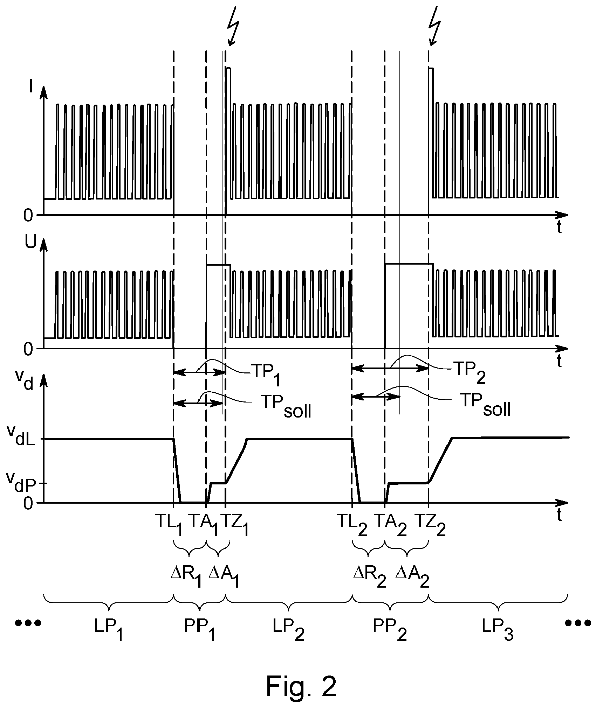

Um die dafür erforderlichen Lichtbogenphasen LP, in denen gefügt, also geschweißt oder gelötet wird, und die sich mit den Lichtbogenphasen LP zyklisch abwechselnden Pausenphasen PP, in denen nicht gefügt, also nicht geschweißt oder gelötet wird, zu erzeugen (siehe Fig.2), ist es entsprechend den vorstehenden Ausführungen erforderlich, einen brennenden Lichtbogen 11 zu Beginn einer Pausenphase PP zunächst zu löschen und den Drahtvorschub zu stoppen. Stoppen des Drahtvorschubes bedeutet, dass die Drahtvorschubgeschwindigkeit $v_d$ reduziert und zu Null gebracht wird, wozu bei der in Fig.1 gezeigten Schweißvorrichtung die Drehbewegung der Schweißdraht-Rolle 13 gebremst werden muss. Da eine Schweißdraht-Rolle 13 eine physikalische Trägheit aufweist, geschieht ein Übergang einer Drahtvorschubgeschwindigkeit auf den Wert Null nicht instantan.

Wie an früherer Stelle erwähnt, ist das Löschen eines Lichtbogens 11 insbesondere durch das Unterbrechen der Fügespannung U komfortabel und zeitlich präzise möglich. Auch das Stoppen oder die Geschwindigkeitsreduktion des Drahtvorschubes ist in der Regel problemfrei, wobei angemerkt sei, dass mit der Geschwindigkeitsreduktion des Drahtvorschubes exakt zu Beginn der Pausenphasen PP begonnen werden kann, oder aber auch geringfügig vor Beginn einer Pausenphase PP oder erst geringfügig nach Beginn einer Pausenphase PP. Auf diese Zusammenhänge wird an späterer Stelle im Detail eingegangen.

Häufig brennt ein Schweißdraht 7a auch nach dem Löschen des Lichtbogens 11 während einer sogenannten Abbranddauer noch kurzfristig weiter ab, insbesondere da im Bereich des dem Werkstück 6 zugewandten Endes des Schweißdrahtes 7a typischerweise hohe Hitze gespeichert ist. Dieses Abbrennen, neben einer allfälligen Bewegung des Schweißdrahtes 7a durch die Vorschubeinheit 12, beeinflusst die verbleibende Distanz, den sogenannten Anschleichweg $s_d$, zwischen dem axialen Ende des Schweißdraht 7a und dem Werkstück 6 zu Beginn einer Pausenphase PP, konkret die Distanz zwischen jenem Ende des Schweißdrahtes 7a, das dem Werkstück 6 zugewandt ist, und dem Werkstück 6.

Wie ebenfalls an früherer Stelle erläutert, erweist sich das Wiederzünden eines Lichtbogens 11 im Gegensatz zum Löschen in vielen Fällen als schwierig. Konkret erfordert eine Lichtbogenwiederzündung bei einer Kurzschlusszündung einen elektrischen Kontakt zwischen dem Schweißdraht 7a und dem Werkstück 6. Da in den Pausenphasen PP der Drahtvorschub aber zunächst reduziert wird und zu Null gebracht wird und der Schweißdraht 7a um den Anschleichweg $s_d$ vom Werkstück 6 entfernt ist, ist es erforderlich, den Drahtvorschub in der Pausenphase PP zunächst erneut zu aktivieren, um den Schweißdraht 7a wieder in Richtung Werkstück 6 zu bewegen. Um eine stabile Wiederzündung des Lichtbogens 11 zu ermöglichen, wird dabei typischerweise auf eine im Vergleich zu den Lichtbogenphasen LP geringere, in der Schweißtechnik als Anschleichgeschwindigkeit bezeichnete Drahtvorschubgeschwindigkeit $v_d$ zurückgegriffen.

Ein Zeitpunkt in einer Pausenphase PP, an dem der Drahtvorschub reaktiviert wird und typischerweise auch die Spannung U, die an der Fügeelektrode 7 anliegt, zum Wiederzünden erneut erhöht wird, wird im Rahmen dieser Patentanmeldung als Aktivierungszeitpunkt TA bezeichnet. Ein Aktivierungszeitpunkt TA unterteilt eine Pausenphase PP in zwei Intervalle. Das zwischen einem Lösch-Zeitpunkt TL zu Beginn einer Pausenphase PP und einem Aktivierungszeitpunkt TA liegende Intervall wird nachfolgend als Ruhe-Intervall ΔR bezeichnet, das dem Aktivierungszeitpunkt TA folgende Intervall bis zum Wiederzünden des Lichtbogens 11 zu einem Zünd-Zeitpunkt TZ als Aktivierungs-Intervall ΔA. Wie für Lösch-Zeitpunkte TL gilt auch für Aktivierungszeitpunkte TA, dass diese Zeitpunkte mit hoher zeitlicher Präzision vorgegeben werden können (das Aktivieren eines Leistungsteils 15 oder einer Vorschub-Antriebseinheit 12a ist üblicherweise nur vernachlässigbaren Störungen unterworfen). Auch für die Dauer von Ruhe-Intervallen ΔR können demnach Sollwerte vorgesehen werden, die in der Praxis bei geringerem Aufwand mit hoher Genauigkeit realisiert werden können.

Ausgehend von den betrachteten Aktivierungszeitpunkten TA ist zu erkennen, dass insbesondere der Anschleichweg $s_d$, den der Schweißdraht 7a in einer Pausenphase PP nach dem erneuten Aktivieren des Drahtvorschubes zu einem Aktivierungszeitpunkt TA im Aktivierungs-Intervall ΔA zurücklegen muss, einen entscheidenden Einflussfaktor auf den Zeitpunkt des Wiederzündens, den Zünd-Zeitpunkt, darstellt. Ein offensichtlicher Grund dafür ist, dass es bei gleichbleibender Drahtvorschubgeschwindigkeit $v_d$ unterschiedlich lange dauert, um verschieden große Anschleichwege $s_d$ zurückzulegen.

Der zurückzulegende Anschleichweg $s_d$ hängt wiederum unter anderem vom genannten Abbrand des Schweißdrahtes 7a nach Beendigung einer Lichtbogenphase LP ab, also von jener Drahtlänge des Schweißdrahtes 7a, die aufgrund der im Schweißdraht 7a gespeicherten Hitze noch abgebrannt wird. Das dem Werkstück 6 zugewandte Ende des Schweißdrahtes 7a entfernt sich dadurch je nach Abbrand mehr oder weniger weit vom Werkstück 6, was den nachfolgend zurückzulegenden Anschleichweg $s_d$ vergrößert oder verkleinert. Der Anschleichweg $s_d$ ist demnach der zu einem Aktivierungszeitpunkt TA vorliegende Abstand zwischen dem dem Werkstück 6 zugewandten Ende des Schweißdrahtes 7a und dem Werkstück 6. Natürlich kann auch ein sich änderndes Oberflächenprofil des Werkstücks 6, über das sich der Schweißbrenner 4 bewegt, den Anschleichweg $s_d$ beeinflussen. Ebenso kann die Bewegung des Schweißdrahtes 7a durch die Vorschubeinheit 12 den Anschleichweg $s_d$ beeinflussen.

Da typischerweise gleich zum Aktivierungszeitpunkt TA mit der Erhöhung der an den Schweißdraht 7a angelegten Spannung U begonnen wird, und damit zum Zeitpunkt des erneuten Kontaktes bereits eine hohe Spannung U vorhanden ist, erfolgt das Wiederzünden üblicherweise unmittelbar nach dem Zeitpunkt des erneuten Kontaktes zwischen Schweißdraht 7a und Werkstück 6, konkret wenn der Schweißdraht 7a wieder angehoben wird und der Lichtbogen 11 aufgezogen wird. Die Zeitpunkte des erneuten Kontakts zwischen einem Schweißdraht 7a und einem Werkstück 6 und die nach einer Pausenphase auftretenden Zünd-Zeitpunkte TZ liegen damit sehr nahe beieinander und werden in der Praxis in einer ersten Näherung vielfach als ident aufgefasst. Schwankungen von Zeitpunkten des erneuten Kontaktes zwischen Schweißdraht 7a und Werkstück 6 führen folglich unweigerlich zu Schwankungen von Zünd-Zeitpunkten TZ, zu denen am Ende von Pausenphasen PP der Lichtbogen 11 erneut gezündet wird. Auch beim Hochspannungszünden gilt, dass es in Abhängigkeit der angelegten (hohen) Zündspannung U erst zu einem Durchschlag und damit zu einem Wiederzünden kommt, wenn der verbleibende Anschleichweg $s_d$ eine bestimmte untere Grenze unterschritten hat. Der Zeitpunkt, wann diese untere Grenze unterschritten wird, hängt wie beim Kurzschlusszünden vom zu Beginn eines Aktivierungs-Intervalls ΔA gegebenen Anschleichweg $s_d$ ab. Hier ergibt sich also das gleiche Problem.

Zur Visualisierung dieser Zusammenhänge zeigt Fig.2 schematische Zeitverläufe der Fügeparameter Fügestrom I, Fügespannung U und Drahtvorschubgeschwindigkeit $v_d$, die bei einem Intervallfügeverfahren nach Stand der Technik, beispielsweise auf einer MSG-Schweißvorrichtung 1 gemäß Fig.1, auftreten können. Es ist erkennbar, dass in den Lichtbogenphasen $LP_1$, $LP_2$, $LP_3$ eine gepulste Fügespannung U und ein gepulster Fügestrom I verwendet werden, was aber natürlich nicht notwendig ist und nur ein Beispiel für das Schweißen während der Lichtbogenphasen darstellt. Die Drahtvorschubgeschwindigkeit $v_d$ weist während der Lichtbogenphasen $LP_1$, $LP_2$, $LP_3$ einen Wert $v_{dL}$ auf, und wird in diesem Ausführungsbeispiel während der Pausenphasen $PP_1$, $PP_2$ zunächst auf den Wert Null reduziert. Auch die Fügespannung U und als Konsequenz davon der Fügestrom I werden zu Beginn der Pausenphasen $PP_1$, $PP_2$ zunächst auf den Wert Null reduziert. Um am Ende der Pausenphasen $PP_1$, $PP_2$ eine Wiederzündung des Lichtbogens 11 sicherstellen zu können, wird bereits während der Pausenphasen $PP_1$, $PP_2$ zu je einem Aktivierungszeitpunkt $TA_1$, $TA_2$ erneut mit dem Drahtvorschub in Richtung zum Werkstück 6 begonnen, wobei zunächst auf eine geringere Drahtvorschubgeschwindigkeit $v_{dP}$ als Anschleichgeschwindigkeit zurückgegriffen wird. Auch die Spannung U wird in diesem Ausführungsbeispiel zu den Aktivierungszeitpunkten $TA_1$, $TA_2$ wieder erhöht, um bei erneutem Kontakt zwischen Schweißdraht 7a und Werkstück 6 unmittelbar eine Wiederzündung des Lichtbogens 11 herbeiführen zu können.

Weiters ist anhand der Verläufe aus Fig.2 zu erkennen, dass die Lichtbogenphasen LP jeweils zwischen einem Zünd-Zeitpunkt TZ, an dem der Lichtbogen 11 gezündet wird, und einem Lösch-Zeitpunkt TL liegen, an dem der Lichtbogen 11 gelöscht wird, und dass die Pausenphasen PP jeweils zwischen einem Lösch-Zeitpunkt TL und einem Zünd-Zeitpunkt TZ liegen. Darüber hinaus ist eine Soll-Pausendauer $TP_{soll}$ vorgegeben, wobei gewünscht ist, dass die tatsächlichen Zeitdauern der Pausenphasen $PP_1$, $PP_2$ dieser Soll-Pausendauer $TP_{soll}$ möglichst exakt entsprechen.

Dass dieser Vorgabe in der Praxis allerdings nicht immer entsprochen wird, kann insbesondere von der dargestellten zweiten Pausenphase $PP_2$ abgeleitet werden. Die Zeitdauer der zweiten Pausenphase $PP_2$ ist merklich größer als die Zeitdauer der ersten Pausenphase $PP_1$, und weicht signifikant von der vorgegebenen Soll-Pausendauer $TP_{soll}$ ab. Im gegenständlichen Fall ist der Grund beispielsweise ein geänderter (vergrößerter) Abbrand des Schweißdrahtes 7a, sodass ein größerer Anschleichweg $s_d$ zurückgelegt werden muss. Aufgrund der eingangs erläuterten Wirkungskette Pausendauern - eingebrachte Wärmemenge - Schweißnahtfehler sind derartige Abweichungen höchst unerwünscht.

Um die anhand Fig.2 geschilderten Probleme zumindest zu mindern, ist im Rahmen der Erfindung vorgesehen, während des Lichtbogen-Intervallfügeverfahrens eine erste Pausendauer $TP_1$ einer ersten Pausenphase $PP_1$ zu ermitteln, und in dem Fall, dass die ermittelte erste Pausendauer $TP_1$ von einer vorgegebenen Soll-Pausendauer $TP_{soll}$ abweicht, zumindest einen Fügeparameter des Lichtbogen-Intervallfügeverfahrens, der die Pausendauern der Pausenphasen PP beeinflusst, derart zu verändern, dass eine Abweichung zwischen einer zweiten Pausendauer $TP_2$ einer zweiten Pausenphase $PP_2$, die der ersten Pausenphase $PP_1$ zeitlich nachfolgt, und einer vorgegebenen Soll-Pausendauer $TP_{soll}$ im Vergleich zur Abweichung der ersten Pausendauer $TP_1$ von der Soll-Pausendauer $TP_{soll}$ verringert wird. Durch die erfindungsgemäße Änderung des zumindest einen Fügeparameters werden natürlich auch weitere Pausendauern $TP_3$, $TP_4$, etc. von weiteren, der zweiten Pausenphase $PP_2$ nachfolgenden Pausenphasen $PP_3$, $PP_4$ an die vorgegebene Soll-Pausendauer $TP_{soll}$ herangeführt. Im Idealfall wird die Abweichung zwischen der vorgegebenen Soll-Pausendauer $TP_{soll}$ und den auftretenden Pausendauern $TP_2$, $TP_3$, etc. überhaupt zu Null gebracht.

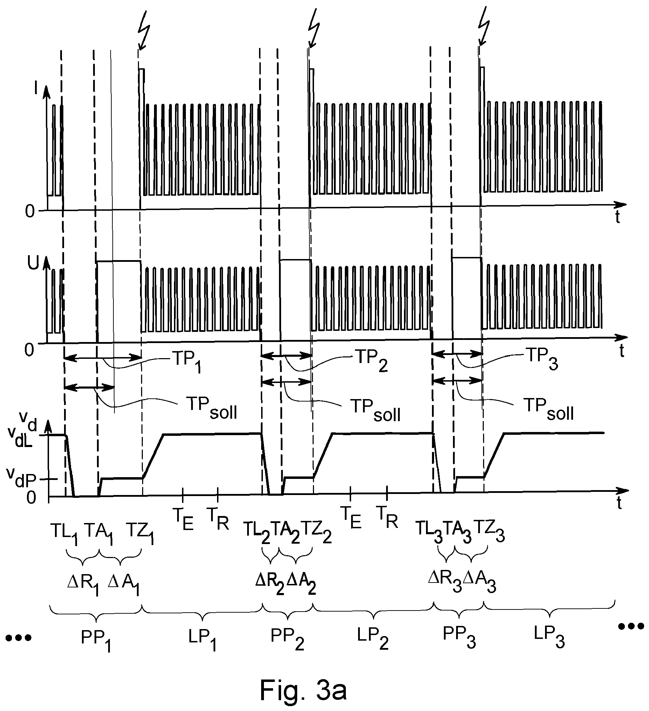

Das ist in Fig.3a anhand eines Ausführungsbeispiels der Erfindung dargestellt, wie nachfolgend noch im Detail erläutert wird.

Eine effiziente Möglichkeit zur Umsetzung der Erfindung besteht darin, die Pausendauern TP der Pausenphasen PP direkt zu messen. Wie erwähnt sind die Lösch-Zeitpunkte TL üblicherweise bekannt, und auch die Zünd-Zeitpunkte TZ werden in Schweißvorrichtungen 1, wie der in Fig.1 gezeigten, oftmals automatisch überwacht, beispielsweise durch eine Überwachung des Fügestromes I. Aus der zeitlichen Differenz eines Zünd-Zeitpunktes TZ und dem vorhergehenden Lösch-Zeitpunkt TL kann auf die Pausendauer TP einer Pausenphase geschlossen werden.

Bei einem Schweißverfahren, bei dem der der Lichtbogen 11 zu Beginn der Pausenphasen PP gelöscht, der Drahtvorschub reduziert und die Drahtvorschubgeschwindigkeit folglich zu Null gebracht wird, kann aber insbesondere auch die Zeitdauer eines Aktivierungs-Intervalls $\Delta A$ zwischen einem Aktivierungszeitpunkt TA und einem nachfolgenden Zünd-Zeitpunkt TZ gemessen werden, um daraus die Pausendauer einer Pausenphase PP zu ermitteln. Wie erwähnt lassen sich Aktivierungszeitpunkte TA mit hoher Präzision festlegen, sodass die Dauer eines Ruhe-Intervalls $\Delta R$ üblicherweise bekannt ist. Sind die Dauern sowohl des Ruhe-Intervalls $\Delta R$ als auch des Aktivierungs-Intervalls $\Delta A$ in einer Pausenphase PP bekannt, kann durch einfache Summation auf die Pausendauer TP der Pausenphase PP geschlossen werden.

Es ist aber keinesfalls zwingend, dass direkt die Zeitdauer eines Aktivierungs-Intervalls $\Delta A$ gemessen wird. Im Rahmen der Erfindung wurde erkannt, dass ebenso der Anschleichweg $s_d$, den der Schweißdraht 7a in einem vergangenen Aktivierungs-Intervalls $\Delta A$ zurückgelegt hat, ermittelt werden kann. Diese Information steht in den für die Praxis relevanten Fällen in einer Steuereinheit 14 zum Steuern einer Vorschub-Antriebseinheit 12a unmittelbar zur Verfügung. Da die in den Pausenphasen PP verwendete Drahtvorschubgeschwindigkeit $v_{dP}$ natürlich bekannt ist, kann aus dem nach einem Aktivierungszeitpunkt TA zurückgelegten Weg des Schweißdrahtes 7a leicht auf die damit verknüpfte Zeitdauer eines Aktivierungs-Intervalls $\Delta A$ geschlossen werden, im einfachsten Fall durch eine Division. Die gesamte Dauer eine Pausenphase PP ergibt sich auch in diesem Fall durch Summation der Dauern des Ruhe-Intervalls $\Delta R$ und des Aktivierungs-Intervalls $\Delta A$. Da sich der Schweißdraht in einem Ruhe-Intervall $\Delta R$ üblicherweise nicht bewegt, könnte jedoch ebenso der vom Schweißdraht 7a in der gesamten Pausenphase PP zurückgelegte Weg ermittelt werden.

Als Fügeparameter zur Beeinflussung und Korrektur der Pausendauern TP der Pausenphasen PP stehen mehrere Möglichkeiten zur Verfügung. Konkret kann im Rahmen der Erfindung ein Aktivierungszeitpunkt TA zeitlich verschoben werden, z.B. näher zum vorhergehenden Lösch-Zeitpunkt TL oder weiter vom vorhergehenden Lösch-Zeitpunkt TL weg, wodurch die gewünschte Korrektur der Pausendauern TP erwirkt werden kann.

Ebenso kann die nach einem Aktivierungszeitpunkt TA vorgegebene Drahtvorschubgeschwindigkeit $v_{dP}$ erhöht oder verringert werden, um die Dauer des Aktivierungs-Intervalls $\Delta A$ zu erhöhen oder zu verringern und damit die Pausendauern TP zu korrigieren.

Darüber hinaus wurde erkannt, dass der für die Dauer eines Aktivierungs-Intervalls $\Delta A$ maßgebliche Anschleichweg $s_d$ durch die Höhe des in der vorhergehenden Lichtbogenphase LP eingesetzten Fügestromes I beeinflusst wird. Der Grund dafür ist, dass ein höherer Fügestrom I zu mehr im Schweißdraht 7a gespeicherter Hitze führt, was zu größerem Abbrand führt und damit zu einem größeren Anschleichweg $s_d$ führt. Bei gleichbleibender Anschleichgeschwindigkeit $v_d$ aber sich veränderndem Anschleichweg $s_d$ verändert sich aus offensichtlichen Gründen unmittelbar die Dauer eines Aktivierungs-Intervalls $\Delta A$ und damit die resultierenden Pausendauern PP.

In einer besonders vorteilhaften Weise können die eben genannten Fügeparameter zur Beeinflussung eines Zünd-Zeitpunktes TZ auch kombiniert verändert werden.

Wie sich die erfindungsgemäße Vorgehensweise auf die Zeitverläufe von Fügestrom I, Fügespannung U und Drahtvorschubgeschwindigkeit $v_d$ auswirken kann, ist in Fig.3a gezeigt. Wie in Fig.2 wird auch im Fig.3a dargestellten Fall in den Lichtbogenphasen $LP_1$, $LP_2$, $LP_3$ eine gepulste Fügespannung U, der einen gepulsten Fügestrom I zur Folge hat, verwendet. Wie in Fig.2 weist die Drahtvorschubgeschwindigkeit $v_d$ auch in Fig.3a während der Lichtbogenphasen $LP_1$, $LP_2$, $LP_3$ einen Wert $v_{dL}$ auf, und wird während der Pausenphasen $PP_1$, $PP_2$ zunächst auf den Wert Null reduziert. Auch die Fügespannung U und der Fügestrom I werden zu Beginn der Pausenphasen $PP_1$, $PP_2$, $PP_3$ zunächst auf Null reduziert. Wie im in Fig.2 gezeigten Fall weicht die Pausendauer der ersten Pausenphasen $PP_1$ merklich von der vorgegebenen Soll-Pausendauer $TP_{soll}$ ab.

Im Zuge der nachfolgenden, zweiten Pausenphase $PP_2$ wird der zweite Aktivierungszeitpunkt $TA_2$ jedoch nach vorne verschoben, d.h. näher an den vorhergehenden Lösch-Zeitpunkt $TL_2$ heran. Daraus ergibt sich ein im Vergleich zur ersten Pausenphase PP1 verkürztes Ruhe-Intervall $\Delta R_2$ und damit insgesamt eine der Soll-Pausendauer bereits sehr präzise entsprechende Pausendauer $TP_2$ der gesamten Pausenphase $PP_2$. In der dritten Pausenphasen $PP_3$ wird die zeitliche Lage des Aktivierungszeitpunktes $TA_3$ im Vergleich zur zweiten Pausenphase $PP_2$ beibehalten, es wird also in der dritten Pausenphase $PP_3$ ein gleich langes Ruhe-Intervall $\Delta R_3$ vorgesehen, wie in der zweiten Pausenphase PP2, sodass eine zufriedenstellende Übereinstimmung mit der vorgegebenen Soll-Pausendauer $TP_{soll}$ beibehalten wird. Durch die Erfindung wird es damit möglich, bereits nach nur wenigen Intervallzyklen eine konstante Pausen- und Lichtbogendauer zu realisieren.

Allgemein formuliert kann die erfindungsgemäße Ermittlung der Pausendauern TP umgesetzt werden, indem zur Ermittlung der ersten Pausendauer TP1 ein Parameterwert PW eines Beschreibungs-Parameters PT des Lichtbogen-Intervallfügeverfahrens, wie die Zeitdauer eines Aktivierungs-Intervalls $\Delta A$ oder ein Anschleichweg $s_d$, der die erste Pausendauer TP1 beschreibt, ermittelt wird, und aus diesem Parameterwert PW die zur Umsetzung der Erfindung benötigte, zumindest eine Pausendauer TP1 bestimmt wird.

Zur Ermittlung des Parameterwertes PW des Beschreibungs-Parameters PT können verschiedene, insbesondere aus der Regelungstechnik oder Signalverarbeitung bekannte Methoden eingesetzt werden, wobei der Parameterwert PW kann unter anderem mittels eines Filters, wie insbesondere eines Kalman-Filters, oder mittels eines Beobachters, wie insbesondere eines Luenberger-Beobachters, oder mittels eines adaptiven Systems oder mittels eines neuronalen Netzes aus Messwerten eines oder mehrerer Fügeparameter des Lichtbogen-Intervallfügeverfahrens ermittelt werden.

Wie an früherer Stelle erläutert, beeinflusst der in den Lichtbogenphasen LP fließende Fügestrom I den Abbrand eines Schweißdrahtes 7a oder eines Lotes, und wirkt sich damit unmittelbar auf den sich in den Pausenphasen PP einstellenden Anschleichweg $s_d$ aus. Bekanntermaßen ergibt sich die durch einen Zeitverlauf eines elektrischen Stromes transportierte Energie aus der durch diesen Zeitverlauf überdeckten Strom-Zeit-Fläche. Ist die Strom-Zeit-Fläche größer, wird mehr elektrische Energie und damit mehr Wärme übertragen, im gegenständlichen Fall in einen Schweißdraht 7a oder in ein Lot, was zu größerem Abbrand führt. Ist die Strom-Zeit-Fläche geringer, kommt es zu einem geringeren Wärmeeintrag und damit zu weniger Abbrand. In entsprechender Weise ist es möglich, durch eine geeignete Veränderung des Fügestromes I die am Ende einer Lichtbogenphase LP in einem Schweißdraht 7a verbleibende Hitze, damit den Abbrand und folglich den zurückzulegenden Anschleichweg $s_d$ zu steuern.

Neben dem Fügestrom I nimmt, wie erwähnt, vor allem die Drahtvorschubgeschwindigkeit $v_d$ Einfluss auf den ausgehend von einem Aktivierungszeitpunkt TA zurückzulegenden Anschleichweg $s_d$, sodass in einer besonders vorteilhaften Ausgestaltung der Fügestrom I und die Drahtvorschubgeschwindigkeit $v_d$ kombiniert verändert werden können, um den Anschleichweg $s_d$ und damit letztlich die Pausendauern TP der gegenständlichen Pausenphasen PP zu regeln.

Es sei jedoch angemerkt, dass eine Veränderung des Fügestromes I natürlich auch alleine, ohne zusätzliche Veränderung der Drahtvorschubgeschwindigkeit $v_d$ erfolgen kann, und dass eine Veränderung der Drahtvorschubgeschwindigkeit $v_d$ natürlich ebenso alleine, unabhängig von einer Veränderung des Fügestromes I vorgenommen werden kann.

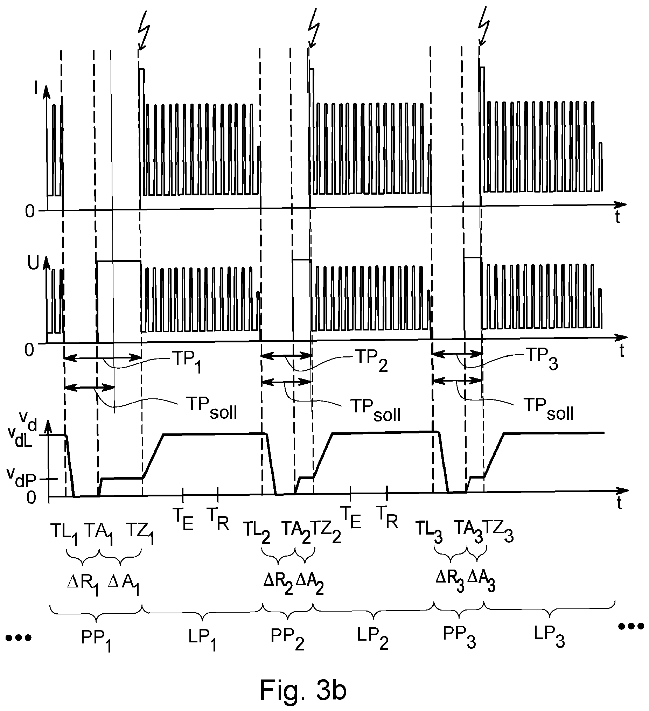

Wie sich eine Veränderung des Fügestromes I im Rahmen dieser Erfindung auswirken kann, ist in Fig.3b dargestellt. Bei den in Fig.3b gezeigten Verläufen wird ab der ersten Lichtbogenphase $LP_1$ die Amplitude des jeweils letzten Fügestrompulses abgesenkt, was zu einer Reduktion der übertragenen Wärme und damit zu einer Reduktion des auftretenden Abbrandes führt. Um die Änderung des Fügestromes I mit einer Änderung der Drahtvorschubgeschwindigkeit $v_d$ zu kombinieren, ist in der in Fig.3b gezeigten Situation ein sogenannter "Nachlauf" der Drahtvorschubgeschwindigkeit $v_d$ vorgesehen. Das bedeutet, dass die Reduktion der Drahtvorschubgeschwindigkeit $v_d$ nicht unmittelbar zu den Lösch-Zeitpunkt $TL_2$, $TL_3$ begonnen wird, sondern erst geringfügig nach Beginn der nachfolgenden Pausenphasen $PP_2$, $PP_3$.

Bei Schweiß- oder Lötverfahren ohne Fügestrompulse kann in einer vorteilhaften Weise direkt eine Strom-Zeit-Fläche vorgegeben werden, beispielsweise eine gesamte in einer Lichtbogenphase LP überstrichene Strom-Zeit-Fläche, oder eine in der zweiten Hälfte einer Lichtbogenphase LP überstrichene Strom-Zeit-Fläche. Mittels der beschriebenen Veränderung der Fügestromes I wird es möglich, ein sogenanntes "Abbrandprogramm" umzusetzen, und damit eine vorgegebene Abschmelzrate eines Schweißdrahtes 7a oder eines Lotes zu realisieren. Generell können verschiedene Attribute eines Fügestromes I zur Regelung des Abbrandes verändert werden, wie ein Spitzenwert des Fügestromes I oder ein Effektivwert des Fügestromes I oder die Frequenz von Pulsen eines Fügestromes I, oder weitere Attribute eines Fügestromes I.

Im Gegensatz zur in Fig.3b gezeigten Situation kann die Amplitude des letzten Fügestrompulses I aber auch erhöht werden, um die verbleibende Hitze im Schweißdraht 7a zu erhöhen und damit mehr Abbrand herbeizuführen. Auch ist die Änderung der Höhe von Fügestrompulsen keineswegs auf den letzten Fügestrompuls beschränkt, sodass in gleicher Weise die Amplituden mehrerer am Ende einer Lichtbogenphasen LP liegender Strompulse erhöht oder reduziert werden können, z.B. die Amplituden der letzten zwei Fügestrompulse oder die Amplituden der letzten drei Fügestrompulse. Darüber hinaus kann der Zeitpunkt, an dem mit der Reduktion der Drahtvorschubgeschwindigkeit $v_d$ begonnen wird, nicht nur in eine nachfolgende Pausenphase verschoben werden, sondern auch vorverlegt werden. Im Rahmen der Erfindung kann also bereits vor einem Lösch-Zeitpunkt TL, innerhalb einer Lichtbogenphase LP, mit einer Reduktion Drahtvorschubgeschwindigkeit $v_d$ begonnen werden, was in letzter Konsequenz zu einer Erhöhung des Anschleichweges $s_d$ beiträgt.

Weiters sei hinsichtlich der zeitlichen Verschiebung des Beginns der Reduktion Drahtvorschubgeschwindigkeit $v_d$ angemerkt, dass derartige Verschiebungen im Vergleich zu den auftretenden Pausendauern TP und Lichtbogendauern TL bevorzugt gering gewählt werden. "Gering" bedeutet, dass mit der Reduktion Drahtvorschubgeschwindigkeit $v_d$ üblicherweise nicht später als nach dem Verstreichen eines Zehntels oder eines Viertels oder eines Drittels einer Pausenphase PP begonnen wird, jedenfalls so, dass die Drahtvorschubgeschwindigkeit $v_d$ innerhalb einer Pausenphase PP zu Null gebracht werden kann.

Wird auf eine Änderung des Fügestromes I und/oder eine Änderung der Drahtvorschubgeschwindigkeit $v_d$ zurückgegriffen, kann auf ein Verändern von Aktivierungszeitpunkt TA in den Pausenphasen verzichtet werden, wie in Fig.3b gezeigt. Ebenso ist allerdings möglich, die Aktivierungszeitpunkte TA zusätzlich zum Fügestrom I und/oder zusätzlich zur Drahtvorschubgeschwindigkeit $v_d$ als weitere Stellgröße zu verändern.

Die erfindungsgemäßen Verfahrensschritte können natürlich in Software umgesetzt werden, bevorzugt in einer Steuereinheit wie der in Fig.1 gezeigten Steuereinheit 14. Bei einer Umsetzung in Software erfolgt die Abarbeitung der auszuführenden Verfahrensschritte typischerweise zu diskreten Zeitpunkten $t_k = k \cdot T_s$, die sich als Produkt einer vorgegebenen Abtastzeit $T_s$ und einem diskreten Index k ergeben. Bei einer zeitdiskreten, natürlich aber auch bei einer analogen, Implementierung kann in einer vorteilhaften Weise vorgesehen sein, die Pausendauer der ersten Pausenphase $PP_1$ während des Lichtbogen-Intervallfügeverfahrens zu einem diskreten Ermittlungs-Zeitpunkt $T_E$, der der ersten Pausenphase $PP_1$ nachfolgt, zu ermitteln, und den zumindest einen Fügeparameter des Lichtbogen-Intervallfügeverfahrens zur Beeinflussung der Pausendauer $TP_2$ der zweiten Pausenphase $PP_2$ in dem Fall, dass die ermittelte erste Pausendauer $TP_1$ von der vorgegebenen Soll-Pausendauer $TP_{soll}$ abweicht, zu einem diskreten Regel-Zeitpunkt $T_R$, der dem Ermittlungs-Zeitpunkt $T_E$ nachfolgt, zu verändern.

Um bei dieser Vorgehensweise zügig und zeitnah auf eine Abweichung zwischen einer ermittelten Pausendauer und einer vorgegebenen Soll-Pausendauer $TP_{soll}$ zu reagieren, kann vorgesehen sein, dass zwischen dem Ermittlungs-Zeitpunkt $T_E$ und dem Regel-Zeitpunkt $T_R$ weniger als 100 Pausenphasen PP oder weniger als 50 Pausenphasen PP oder weniger als 10 Pausenphasen PP oder weniger als fünf Pausenphasen PP oder gar keine Pausenphasen PP liegen. In einer besonders vorteilhaften Weise kann die zweite Pausenphase $PP_2$ erst nach dem Regel-Zeitpunkt $T_R$ beginnen, sodass sichergestellt ist, dass die Adaption des zu verändernden Fügeparameters bereits stattgefunden hat, bevor eine neue Pausenphase PP beginnt.

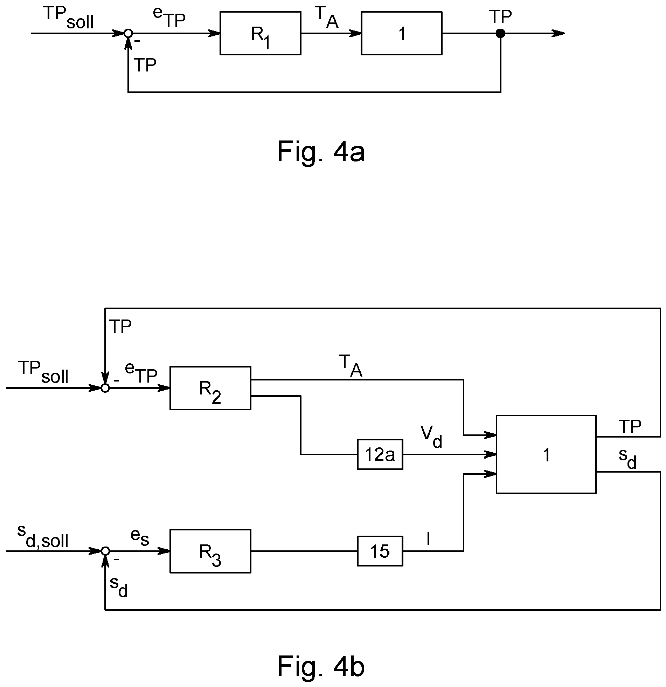

Zwei vorteilhafte Umsetzungsvarianten des erfindungsgemäßen Verfahrens in Form von Koppelplänen sind abschließend in den Figuren 4a und 4b gezeigt. Dabei fasst Fig.4a den Grundgedanken der gegenständlichen Erfindung in Form eines aus der Regelungstechnik hinlänglich bekannten Standardregelkreises zusammen. Entsprechend den vorhergehenden Ausführungen stellt die Schweißvorrichtung 1 die zu regelnde Strecke dar, von der die auftretenden Pausendauern TP der Pausenphasen PP ermittelt werden.

Eine ermittelte Pausendauer TP wird mit einer vorgegebenen Soll-Pausendauer $TP_{soll}$ verglichen, woraus sich ein Pausendauern-Regelfehler $e_{TP}$ ergibt. Der Pausendauern-Regelfehler $e_{TP}$ wird einem Regler $R_1$ als Eingangsgröße zugeführt, der daraus einen geänderten Aktivierungszeitpunkt TA als Stellgröße ermittelt. Der ermittelte Aktivierungszeitpunkt TA wird wiederum beim Betrieb der Schweißvorrichtung 1 verwendet, wobei sich die tatsächlich einstellenden Pausendauern TP bei Verwendung eines geeignet ausgelegten Reglers auf die Soll-Pausendauer $TP_{soll}$ angleichen.

Beim Regler R1 kann es sich um einen PID-Regler oder um einen modellprädiktiven Regler oder um einen flachheitsbasierten Regler oder um einen Backstepping-Regler oder um einen Sliding-Mode Regler handeln, die entsprechend den vorstehenden Ausführungen natürlich in einer zeitdiskreten Formulierung in Software implementiert werden können.

In einer besonders vorteilhaften Ausgestaltung der Erfindung kann für den Regler R1 das Regelgesetz

$$TA_{k+1} = TA_k + e_{TP,k}$$

gewählt werden. Wie an früherer Stelle erwähnt, steht die Variable k dabei für einen zeitdiskreten Index, sodass $TA_k$ und $TA_{k+1}$ zwei aufeinanderfolgende Aktivierungszeitpunkte darstellen. Dieses einfache Regelgesetz, das einem Integrator mit Verstärkungsfaktor 1/Ts entspricht, verschiebt einen nachfolgenden Aktivierungszeitpunkt $TA_{k+1}$ immer exakt um die zum vorhergehenden Zeitpunkt vorliegende Abweichung zwischen Pausendauer und Soll-Pausendauer.

Um beispielsweise eine Mittelung der auftretenden Regelfehler $e_{TP,k}$ vorzusehen, kann obiges Regelgesetz zu

$$TA_{k+1} = TA_k + B \cdot e_{TP,k}$$

ergänzt werden, mit einem multiplikativen Einstellungsparameter B zur Gewichtung des Regelfehlers $e_{TP,k}$.

Wie erwähnt können neben der Veränderung des Aktivierungszeitpunktes TA allerdings auch andere oder zusätzliche Fügeparameter geändert werden, um die auftretenden Pausendauern der Pausenphasen PP zu beeinflussen. Eine dahingehende Möglichkeit, bei der zur Umsetzung der Erfindung neben dem Aktivierungszeitpunkt TA auch auf den Fügestrom I und die Drahtvorschubgeschwindigkeit $v_d$ zurückgegriffen wird, ist in Fig.4b gezeigt.

Auch hier ist ein erster Regelkreis vorgesehen, wo wie in Fig.4a eine ermittelte Pausendauer TP mit einer vorgegebenen Soll-Pausendauer $TP_{soll}$ verglichen wird, daraus ein Pausendauern-Regelfehler $e_{TP}$ ermittelt wird und daraus ein geänderter Aktivierungszeitpunkt TA als erste Stellgröße bestimmt wird. Eine Besonderheit am in Fig.4b gezeigten Regler R2 ist jedoch, dass der Regler R2 auf zwei Stellgrößen einwirken kann, einerseits auf die Aktivierungszeitpunkt TA, andererseits auf die in den Pausenphasen herangezogenen Drahtvorschubgeschwindigkeit $v_d$. Wie weiter oben im Detail ausgeführt, kann die in den Pausenphasen PP eingesetzte Drahtvorschubgeschwindigkeit $v_d$ zur Beeinflussung der Dauer zwischen Aktivierungszeitpunkt TA und nachfolgendem Zündzeitpunkt TZ eingesetzt werden, sodass natürlich auch die Drahtvorschubgeschwindigkeit $v_d$ als Stellgröße zur Veränderung der Zeitdauer eines Aktivierungs-Intervalls $\Delta$A eingesetzt werden kann. Wie anhand Fig.3b beschrieben, ist es aber ebenso denkbar, die Drahtvorschubgeschwindigkeit $v_d$ am Ende einer Lichtbogenphase LP als Stellgröße zur Veränderung von Pausendauern TP einzusetzen.

Wie an früherer Stelle eingehend erläutert, ergeben sich von einer vorgegebenen Soll-Pausendauer $TP_{soll}$ abweichende Pausendauer TP insbesondere aus sich verändernden Anschleichwegen $s_d$, sodass in Fig.4b mittels eines weiteren Reglers R3 vorgesehen ist, nicht nur auf die Pausendauer TP selbst zu regeln, sondern ebenso den Anschleichweg $s_d$ zu ermitteln, diesen mit einem vorgegebenen Soll-Anschleichweg $s_{d,soll}$ zu vergleichen, daraus einen Anschleichweg-Regelfehler $e_s$ zu ermitteln und diesen Anschleichweg-Regelfehler $e_s$ dem weiteren Regler R3 zum Regeln zuzuführen. Die im Rahmen der Erfindung gegebenen Möglichkeiten zur Beeinflussung bzw. Regelung des Anschleichweges $s_d$, beispielsweise durch Veränderung eines Fügestromes I oder einer Drahtvorschubgeschwindigkeit $v_d$ wurden an früherer Stelle eingehend erläutert. Es sei angemerkt, dass der untere der in Fig.4b gezeigten Regelkreise auch alleine vorgesehen sein kann.

Bei der Auslegung eines Regelkreises gemäß Fig.4b mit mehr als einer Stellgröße kann es überdies vorteilhaft sein, Methoden aus dem regelungstechnischen Bereich der Control-Allocation heranzuziehen, um sämtliche Regelkreise geeignet aufeinander abzustimmen und zu verhindern, dass sich verschiedene Regler R2, R3 oder verschiedene Stellgrößen TA, $v_d$, I gegenseitig behindern.

## Patentansprüche

1. Lichtbogen-Intervallfügeverfahren umfassend eine Abfolge von Lichtbogenphasen (LP) und Pausenphasen (PP), wobei die Lichtbogenphasen (LP) eine vorgegebene Lichtbogendauer aufweisen und sich mit den Pausenphasen (PP) zeitlich abwechseln, wobei in den Lichtbogenphasen (LP) zwischen einer Fügeelektrode (7) und einem Werkstück (6) ein Fügestrom (I) zum Fügen des Werkstücks (6) fließt und in den Pausenphasen (PP) kein Fügestrom (I) fließt, **dadurch gekennzeichnet, dass** während des Lichtbogen-Intervallfügeverfahrens eine erste Pausendauer ($TP_1$) einer ersten Pausenphase ($PP_1$) ermittelt wird **und dass** in dem Fall, dass die ermittelte erste Pausendauer ($TP_1$) von einer vorgegebenen Soll-Pausendauer ($TP_{soll}$) abweicht, zumindest ein Fügeparameter des Lichtbogen-Intervallfügeverfahrens, der die Pausendauern der Pausenphasen (PP) beeinflusst, verändert wird, um eine Abweichung zwischen einer zweiten Pausendauer ($TP_2$) einer zweiten Pausenphase ($PP_2$), welche der ersten Pausenphase ($PP_1$) zeitlich nachfolgt, und der vorgegebenen Soll-Pausendauer ($TP_{soll}$) im Vergleich zur Abweichung der ersten Pausendauer ($TP_1$) von der Soll-Pausendauer ($TP_{soll}$) zu verringern.

2. Lichtbogen-Intervallfügeverfahren nach Anspruch 1, **dadurch gekennzeichnet, dass** es sich beim Lichtbogen-Intervallfügeverfahren um ein Lichtbogen-Intervallschweißverfahren oder um ein Lichtbogen-Intervalllötverfahren handelt, wobei in den Lichtbogenphasen (LP) zwischen der Fügeelektrode (7) und dem Werkstück (6) zumindest zeitweise ein Lichtbogen (11) brennt, durch welchen der Fügestrom (I) zum Fügen von der Fügeelektrode (7) zum Werkstück (6) fließt.

3. Lichtbogen-Intervallfügeverfahren nach Anspruch 2, **dadurch gekennzeichnet, dass** der Lichtbogen (11) zu Beginn einer Pausenphase (PP) zu einem Lösch-Zeitpunkt (TL) gelöscht und am Ende einer Pausenphase (PP) zu einem Zünd-Zeitpunkt (TZ) wiedergezündet wird, dass die Pausendauer (TP) einer Pausenphase (PP) einer zeitlichen Distanz zwischen dem Lösch-Zeitpunkt (TL) zu Beginn der Pausenphase (PP) und dem Zünd-Zeitpunkt (TZ) am Ende der Pausenphase (PP) entspricht **und dass** der zumindest eine Fügeparameter des Lichtbogen-Intervallfügeverfahrens die jeweiligen Zünd-Zeitpunkte (TZ) am Ende der Pausenphasen (PP) beeinflusst.

4. Lichtbogen-Intervallfügeverfahren nach einem der vorhergehenden Ansprüche, **dadurch gekennzeichnet, dass** die Pausendauer ($TP_1$) der ersten Pausenphase ($PP_1$) während des Lichtbogen-Intervallfügeverfahrens zu einem der ersten Pausenphase ($PP_1$) nachfolgenden Ermittlungs-Zeitpunkt ($T_E$) ermittelt wird, **dass** der zumindest eine Fügeparameter des Lichtbogen-Intervallfügeverfahrens zur Beeinflussung der Pausendauer ($TP_2$) der zweiten Pausenphase ($PP_2$) in dem Fall, dass die ermittelte erste Pausendauer ($TP_1$) von der vorgegebenen Soll-Pausendauer ($TP_{soll}$) abweicht, zu einem dem Ermittlungs-Zeitpunkt ($T_E$) nachfolgenden Regel-Zeitpunkt ($T_R$) verändert wird, **und dass** zwischen dem Ermittlungs-Zeitpunkt ($T_E$) und dem Regel-Zeitpunkt ($T_R$) weniger als 100 Pausenphasen (PP) oder weniger als 50 Pausenphasen (PP) oder weniger als 10 Pausenphasen (PP) oder weniger als fünf Pausenphasen (PP) oder gar keine Pausenphase (PP) liegen.

5. Lichtbogen-Intervallfügeverfahren nach Anspruch 4, **dadurch gekennzeichnet, dass** die zweite Pausenphase ($PP_2$) nach dem Regel-Zeitpunkt ($T_R$) beginnt.

6. Lichtbogen-Intervallfügeverfahren nach einem oder mehreren der vorhergehenden Ansprüche, **dadurch gekennzeichnet, dass** zur Ermittlung der ersten Pausendauer ($TP_1$) zumindest ein Parameterwert (PW) zumindest eines Beschreibungs-Parameters (PT) des Lichtbogen-Intervallfügeverfahrens, der die erste Pausendauer ($TP_1$) beschreibt, ermittelt wird, **und dass** die erste Pausendauer ($TP_1$) aus dem zumindest einen ermittelten Parameterwert (PW) ermittelt wird.

7. Lichtbogen-Intervallfügeverfahren nach Anspruch 6, **dadurch gekennzeichnet, dass** das Lichtbogen-Intervallfügeverfahren ein MIG-Schweißverfahren oder ein MAG-Schweißverfahren ist, bei dem in den Lichtbogenphasen (LP) ein abschmelzender Schweißdraht (7a) als Fügeelektrode (7) vorgesehen wird, oder ein MIG-Lötverfahren oder ein MAG-Lötverfahren ist, bei dem ein abschmelzendes Lot als Fügeelektrode (7) vorgesehen wird, wobei durch den zwischen der Fügeelektrode (7) und dem Werkstück (6) zumindest zeitweise brennenden Lichtbogen (11) auf dem Werkstück (6) im Bereich einer Fügestelle (25) Energie eingebracht wird, um ein Schmelzbad zu erzeugen, wobei die Fügeelektrode (7) dem Schmelzbad (26) mit einer Drahtvorschubgeschwindigkeit ($v_d$) zugeführt wird und wobei die Fügeelektrode (7) durch die eingebrachte Energie im Bereich des Schmelzbades (26) abgeschmolzen wird, um eine Schweißnaht bzw. Lötnaht (10) am Werkstück (6) zu erzeugen, **dass** der Lichtbogen (11) zu Beginn der Pausenphasen (PP) gelöscht und der Drahtvorschub gestoppt wird, **dass** der Drahtvorschub nach einem Ruhe-Intervall ($\Delta R$) in den Pausenphasen (PP) zu einem Aktivierungszeitpunkt (TA) wieder aktiviert wird **und dass** eine Zeitdauer zwischen dem Aktivierungszeitpunkt (TA) und einem dem Aktivierungszeitpunkt (TA) unmittelbar nachfolgenden Zünd-Zeitpunkt (TZ) als Parameterwert (PW) des Beschreibungs-Parameters (PT) ermittelt wird **und/oder dass** ein Anschleichweg ($s_d$), den der Schweißdraht (8) zwischen dem Aktivierungszeitpunkt (TA) und einem dem Aktivierungszeitpunkt (TA) unmittelbar nachfolgenden Zünd-Zeitpunkt (TZ) zurücklegt, als Parameterwert (PW) des Beschreibungs-Parameters (PT) ermittelt wird.

8. Lichtbogen-Intervallfügeverfahren nach Anspruch 7, **dadurch gekennzeichnet, dass** eine Drahtvorschubgeschwindigkeit ($v_d$), und/oder ein Fügestrom (I) in einer Lichtbogenphase (LP), und/oder ein Aktivierungszeitpunkt (TA), und/oder ein Abstand zwischen dem Schweißdraht (7a) und dem Werkstück (6) zu einem Aktivierungszeitpunkt (TA) und/oder eine Zeitdauer zwischen einem Lösch-Zeitpunkt (TL) und einem Aktivierungszeitpunkt (TA) und/oder eine Strom-Zeit-Fläche in einer Lichtbogenphase (LP) als Fügeparameter des Lichtbogen-Intervallfügeverfahrens zum Beeinflussen eines Zünd-Zeitpunktes (TZ) verändert wird.

9. Lichtbogen-Intervallfügeverfahren nach Anspruch 8, **dadurch gekennzeichnet, dass** eine Drahtvorschubgeschwindigkeit ($v_d$) und/oder ein Fügestrom (I) in einer Lichtbogenphase (LP) und/oder eine Strom-Zeit-Fläche in einer Lichtbogenphase (LP) verändert werden, um einen Abstand zwischen dem Schweißdraht (7a) und dem Werkstück (6) zu einem Aktivierungszeitpunkt (TA) als Fügeparameter des Lichtbogen-Intervallfügeverfahrens zum Beeinflussen eines Zünd-Zeitpunktes (TZ) zu verändern.

10. Lichtbogen-Intervallfügeverfahren nach einem der Ansprüche 6 bis 9, **dadurch gekennzeichnet, dass** der zumindest eine Parameterwert (PW) des zumindest einen Beschreibungs-Parameters (PT) mittels eines Filters oder mittels eines Beobachters oder mittels eines adaptiven Systems oder mittels eines neuronalen Netzes aus zumindest einem Messwert eines oder mehrerer Fügeparameter des Lichtbogen-Intervallfügeverfahrens ermittelt wird **und dass** der zumindest eine Fügeparameter zum Beeinflussen der zweiten Pausenphase ($PP_2$) gemäß einem vorgegebenen Regelgesetz (R) eingestellt wird.

11. Schweißvorrichtung (1) zur Durchführung eines Lichtbogen-Intervallfügeverfahrens, wobei das Lichtbogen-Intervallfügeverfahren eine Abfolge von Lichtbogenphasen (LP) mit einer vorgegebenen Lichtbogendauer und sich mit den Lichtbogenphasen (LP) zeitlich abwechselnden Pausenphasen (PP) aufweist, wobei in den Lichtbogenphasen (LP) zwischen einer Fügeelektrode (7) und einem Werkstück (6) ein Fügestrom (I) zum Fügen des Werkstücks (6) fließt und in den Pausenphasen (PP) kein Fügestrom (I) fließt, umfassend einen Schweißbrenner (4) zum Erzeugen eines Lichtbogens (11) zum Einbringen von Energie an einer Fügestelle (25) an dem Werkstück (6) zur Erzeugung eines Schmelzbades (26), umfassend eine Vorschubeinheit (12) zum Zuführen der Fügeelektrode (7) zum Schmelzbad (26), wobei die Fügeelektrode (7) durch die durch den Schweißbrenner (4) eingebrachte Energie im Bereich des Schmelzbades (26) abschmelzbar ist, um eine Naht (10) am Werkstück (6) zu erzeugen und umfassend eine Steuereinheit (14) zur Steuerung der Schweißvorrichtung (1), **dadurch gekennzeichnet, dass** die Steuereinheit (14) dazu ausgebildet ist, während des Lichtbogen-Intervallfügeverfahrens eine erste Pausendauer ($TP_1$) einer ersten Pausenphase ($PP_1$) zu ermitteln und in dem Fall, dass die ermittelte erste Pausendauer ($TP_1$) von einer vorgegebenen Soll-Pausendauer ($TP_{soll}$) abweicht, zumindest einen Fügeparameter des Lichtbogen-Intervallfügeverfahrens, der die Pausendauern der Pausenphasen (PP) beeinflusst, zu verändern, um eine Abweichung zwischen einer zweiten Pausendauer ($TP_2$) einer zweiten Pausenphase ($PP_2$), die der ersten Pausenphase ($PP_1$) zeitlich nachfolgt, und der vorgegebenen Soll-Pausendauer ($TP_{soll}$) im Vergleich zur Abweichung der ersten Pausendauer ($TP_1$) von der Soll-Pausendauer ($TP_{soll}$) zu verringern.

Fig. 1

Fig. 2

Fig. 3a

Fig. 3b

Fig. 4a

Fig. 4b

Europäisches Patentamt
European Patent Office
Office européen des brevets

# EUROPÄISCHER RECHERCHENBERICHT

**Nummer der Anmeldung**

EP 23 16 1495

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/031290 A1 (MATSUOKA NORIYUKI [JP] ET AL) 4. Februar 2021 (2021-02-04) * Absätze [0030], [0078] – [0081], [0084], [0086], [0090]; Abbildungen 1–10 * | 1–11 | INV. B23K9/09 B23K1/00 B23K9/10 B23K9/095 |
| X | DE 10 2017 113620 B4 (CARL CLOOS SCHWEISSTECHNIK GES MIT BESCHRAENKTER HAFTUNG [DE]) 11. Juli 2019 (2019-07-11) * Absätze [0036] – [0038], [0048]; Abbildungen 1–7 * | 1–11 | |
| X | US 11 267 064 B2 (PANASONIC IP MAN CO LTD [JP]) 8. März 2022 (2022-03-08) | 1–3,11 | |
| A | * das ganze Dokument * | 4–10 | |

**RECHERCHIERTE SACHGEBIETE (IPC)**

B23K

Der vorliegende Recherchenbericht wurde für alle Patentansprüche erstellt

| Recherchenort | Abschlußdatum der Recherche | Prüfer |
|---|---|---|
| München | 31. August 2023 | Weyand, Tim |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 16 1495

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-08-2023

| Im Recherchenbericht angeführtes Patentdokument | Datum der Veröffentlichung | Mitglied(er) der Patentfamilie | | Datum der Veröffentlichung |
|---|---|---|---|---|
| US 2021031290 A1 | 04-02-2021 | CN | 112004631 A | 27-11-2020 |
| | | EP | 3782757 A1 | 24-02-2021 |
| | | JP | WO2019203163 A1 | 22-04-2021 |
| | | US | 2021031290 A1 | 04-02-2021 |
| | | WO | 2019203163 A1 | 24-10-2019 |
| DE 102017113620 B4 | 11-07-2019 | DE | 102017113620 A1 | 27-12-2018 |
| | | DK | 3431214 T3 | 24-02-2020 |
| | | EP | 3431214 A1 | 23-01-2019 |
| | | HU | E047927 T2 | 28-05-2020 |
| | | PL | 3431214 T3 | 18-05-2020 |
| US 11267064 B2 | 08-03-2022 | CN | 109715335 A | 03-05-2019 |
| | | EP | 3508297 A1 | 10-07-2019 |
| | | JP | 6890236 B2 | 18-06-2021 |
| | | JP | WO2018043626 A1 | 24-06-2019 |
| | | US | 2019176257 A1 | 13-06-2019 |
| | | WO | 2018043626 A1 | 08-03-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2214192 A1
- EP 3744460 A1
- EP 2810732 A2